# EUROPÄISCHE PATENTSCHRIFT

(11) **EP 4 584 021 B1**
(45) Veröffentlichungstag und Bekanntmachung des Hinweises auf die Patenterteilung: **24.09.2025**
(21) Anmeldenummer: 24783264.5
(22) Anmeldetag: 02.10.2024
(51) Int. Cl.: B02C 17/16, B02C 17/18, B02C 25/00, C04B 2/00, C04B 26/00

(54) **VORRICHTUNG UND VERFAHREN ZUR TEMPERATUROPTIMIERTEN MECHANO-CHEMISCHEN AKTIVIERUNG**
DEVICE AND METHOD FOR A TEMPERATURE-OPTIMIZED MECHANOCHEMICAL ACTIVATION
DISPOSITIF ET PROCÉDÉ D'ACTIVATION MÉCANOCHIMIQUE À TEMPÉRATURE OPTIMISÉE

(30) Priorität: 29.11.2023 DE 102023133383; 29.11.2023 LU 505653
(43) Veröffentlichungstag der Anmeldung: 16.07.2025
(73) Patentinhaber: thyssenkrupp Polysius GmbH, 59269 Beckum (DE); thyssenkrupp AG, 45143 Essen (DE); SCHWENK Zement GmbH & Co. KG, 89077 Ulm (DE)
(72) Erfinder: WILCZEK, Michael, 48231 Warendorf (DE); MÖLLER, Hendrik, 89604 Allmendingen (DE); HAMM, Andreas, 89275 Elchingen (DE); MAIER, Oliver, 48167 Münster (DE); WILLMS, Eike, 44309 Dortmund (DE); RUDOWSKI, Luc, 13100 Aix en Provence (FR)
(74) Vertreter: Tetzner, Michael
(86) Internationale Anmeldenummer: PCT/EP2024/077665
(87) Internationale Veröffentlichungsnummer: WO 2025/113854

(56) Entgegenhaltungen:
- CN-A- 110 586 265
- ES-B1- 2 245 564
- US-A- 5 776 244
- US-A1- 2014 263 768

## Beschreibung

Die Erfindung betrifft ein Verfahren zur thermisch kontrollierten mechano-chemischen Aktivierung mineralischer Materialien, insbesondere von Tonen.

Insbesondere im Bereich der Zementindustrie haben sich aktivierte Tone als Zusatzstoff etabliert. Der derzeit übliche Weg ist die Trocknung und Calcinierung der Tone, also eine thermische Aktivierung. Hierbei wird zum einen Energie für die Erwärmung benötigt, zum anderen kann die hohe Temperatur auch weitere Stoffveränderungen bewirken, die gegebenenfalls unerwünscht sind. Ferner erfordert der thermische Prozess eine Rauchgasreinigung zur Abscheidung der entstehenden Stickoxid- und Schwefeloxid-Emissionen. Außerdem erfordert der thermische Prozess künftig den Einsatz von Verfahren zur Abscheidung und gegebenenfalls Reinigung des erzeugten beziehungsweise freigesetzten Kohlendioxids.

Daher wird zunehmend die sogenannte mechanische Aktivierung oder auch mechano-chemische Aktivierung durch intensives Mahlen diskutiert.

Bei der mechano-chemischen Aktivierung bleibt zuvor kristallin gebundenes Wasser zum Beispiel als Inner-Schichten-Wasser im mineralischen Material erhalten (Xero-Gele). Diese Differenzierung zu thermisch aktivierten Materialien ist ein wesentliches Qualitätsmerkmal mechano-chemisch aktivierter Stoffe bei der Verwendung als Zementzuschlagstoff, da hieraus verbesserte Bindemittel-Eigenschaften, insbesondere ein niedriger Wasserbedarf, resultieren. Dies hat verbessernde Auswirkung auf zum Beispiel Festigkeitsentwicklung und Verarbeitung des Bindemittel-enthaltenden Mörtels oder Betons, ohne dass teure Zementadditive wie Superplasticizer eingesetzt werden müssen.

Aus der nachveröffentlichten DE 10 2023 106 210 ist ein Verfahren zur Mahlung und puzzolanischen Aktivierung in einer Rührwerkskugelmühle bekannt.

Aus der nachveröffentlichten DE 10 2023 106 217 ist ein Verfahren zur Mahlung und puzzolanischen Aktivierung in zwei separaten Stufen einer Rührwerkskugelmühle bekannt.

Aus der nachveröffentlichten DE 10 2023 106 221 ist die Kombination aus mechanischer und thermischer Aktivierung in wenigstens einer Rührwerkskugelmühle bekannt.

Aus der nachveröffentlichten DE 10 2023 106 222 ist die Farboptimierung bei der mechanischen Aktivierung von Tonen bekannt.

Aus der nachveröffentlichten DE 10 2023 123 525 ist ein Zementzusatzstoff aus Altbeton bekannt.

Ein Vorteil der mechano-chemischen Aktivierung ist, dass auch Tone mit einem geringeren Kaolin-Gehalt mechano-chemisch aktiviert werden können, welche nicht für die thermische Aktivierung geeignet sind. Dieses verbreitert die zur Verfügung stehende Rohstoffbasis.

Eine der Herausforderungen bei der mechanischen Aktivierung ist, dass nur etwa 25 % der eingebrachten Mahlenergie tatsächlich in chemische Energie (Aktivierung) umgewandelt werden, etwa 75 % werden in Wärme umgewandelt. Diese Wärme führt zu einer Erwärmung des Produkts. Daher besteht das Risiko, dass das Material zu stark erwärmt wird und so seine vorteilhaften Eigenschaften verlieren kann. Schwierig ist jedoch dabei, dass die Energie für die ausreichende mechanische Aktivierung eben in das Material eingebracht werden muss, also eine einfache Reduktion der eingebrachten Energie nicht möglich ist.

Aus der CN 110 586 265 A ist eine temperaturkontrollierte Kugelmühle bekannt.

Aus der US 5 776 244 A ist ein ultrafeiner zementhaltiger Mörtel bekannt.

Aus der ES 2 245 564 B1 ist ein Wassereinspritzsystem für eine Mühle mit zwei gesteuerten Zerstäubern, um Wasser individuell in zwei Kammern der Mühle zu sprühen und die Mühlentemperatur zu regulieren, bekannt.

Aus der US 2014 / 263 768 A1 sind eine mechanische Mühle, eine Tonerherstellungsvorrichtung und ein Tonerherstellungsverfahren bekannt.

Aufgabe der Erfindung ist es, ein möglichst schonendes und dennoch zu einem ausreichend aktivierten Produkt führendes Verfahren bereitzustellen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Eine Vorrichtung zur Durchführung des Erfindungsgemäßen Verfahrens dient zur mechanischen Aktivierung eines mineralischen Materials, beispielsweise eines Tones. Herkömmlicherweise erfolgt die Aktivierung thermisch, wobei das mineralische Material beispielsweise auf 900 °C bis 1000 °C erhitzt wird. Das Ziel der Aktivierung wird bei der mechanischen Aktivierung durch sehr intensives Mahlen erreicht, wobei wesentlich mehr Energie eingetragen wird als für die Zerkleinerung benötigt wird. In diesem Bereich der mechanischen Aktivierung ist vielmehr durch das Mahlen ein Partikelwachstum feststellbar. Konkret ist gemeint, dass trotz weiterer Energieaufnahme durch die Partikel eine Vergröberung des Kornbandes mit den üblichen Analyseverfahren festgestellt wird. Die Vorrichtung weist eine Mühle auf. Bevorzugt ist die Mühle eine Rührwerkskugelmühle. Derartige Vorrichtungen sind beispielsweise aus der DE 10 2023 106 210, der DE 10 2023 106 217, der DE 10 2023 106 221, der DE 10 2023 106 222 oder der DE 10 2023 123 525 bekannt. Die Mühle weist einen Antrieb auf. Über den Antrieb wird die Energie in die Mühle eingetragen. Die Vorrichtung weist wenigstens ein erstes Temperaturerfassungselement auf. Ein Temperaturerfassungselement kann hierbei kontaktbehaftet oder kontaktlos sein. Das Temperaturerfassungselement kann beispielsweise ein Thermoelement sein, ebenso kann es als IR-Sensor ausgebildet sein. Bevorzugt weist die Vorrichtung mehrere Temperaturerfassungselemente auf. Das erste Temperaturerfassungselement ist in oder an der Mühle angeordnet. Im einfachsten Fall ist es auf der Außenseite am Gehäuse der Mühle angeordnet. Vorteil ist die einfache Anordnung, die leichte Verbindbarkeit, Vermeidung von Verschleiß durch Mahlgut und dergleichen. Dafür ist die Messung am ungenausten und durch die Gesamtmasse der Mühle gemittelt und zeitverzögert. Besonders genau wäre eine kontaktlose Erfassung der Temperatur des Mahlgutes innerhalb der Mühle, beispielsweise durch IR-Sensoren. Hierbei ist die Herausforderung insbesondere Staubbildung, Anhaftung und Verschleiß durch das Mahlgut. Die Vorrichtung weist eine Steuervorrichtung auf. Die Vorrichtung weist weiter eine Materialzuführung zur Zuführung von Mahlgut zur Mühle auf. Die Steuervorrichtung ist mit dem ersten Temperaturerfassungselement zur Übermittelung der erfassten Temperatur verbunden. Weiter ist die Steuervorrichtung mit dem Antrieb zur Regelung der Antriebsleistung und mit der Materialzuführung zur Regelung der zugeführten Menge an Mahlgut verbunden. Wesentlich ist, dass sowohl die eingebrachte Energie (Regelung der Antriebsleistung) als auch die Menge des zugeführten Mahlgutes geregelt wird, da eine ungefähre Konstanz einer hohen eingebrachten Mahlenergie von beispielsweise 200 kWh/t Mahlgut für die mechanische Aktivierung notwendig ist. Also nur die eingebrachte Energie zu reduzieren würde dazu führen, dass keine ausreichende Aktivierung mehr stattfindet.

Beim Vermahlen eines Materials stellt man in Abhängigkeit vom Energieeintrag drei Stadien fest. Im ersten Stadium sinkt die Partikelgröße (mehr oder weniger linear) zum Energieeintrag (Rittinger-Zone). Vereinfacht ausgedrückt, je mehr man mahlt, um so feiner wird das Produkt. Hierfür gibt es jedoch eine Grenze, eine Partikelgröße, die kaum mehr zu unterschreiten ist. Ab diesem Punkt kommt eine zweite Stufe, bei der sich die Partikelgröße mit weiterem Energieeintrag nicht weiter verändern lässt (Aggregations-Zone). Aus wirtschaftlichen Gründen vermeidet man bei einer Vermahlung daher den Übergang von der ersten Stufe zur zweiten Stufe, da für mehr Aufwand eben kein weiterer Zerkleinerungseffekt zu verzeichnen ist. Erhöht man die Energiezufuhr noch weiter, so kann eine dritte Stufe erreicht werden, bei der wieder ein Ansteigen der Partikelgröße feststellbar ist (Agglomerations-Zone). Dieser Bereich wird bei einer Vermahlung daher noch viel eher vermieden, da mit geringerem Aufwand ein besseres Ergebnis in Bezug auf die Partikelgrößenverteilung erzielt werden kann.

Es hat sich jedoch herausgestellt, dass es bei hohen Energieeinträgen, also im dritten Stadium, zu Veränderungen des Materials selbst kommt, die beispielsweise bei Tonen, ebenso wie eine thermische Aktivierung, zu einer Aktivierung führt, also zu einer Reaktivität, die die Verwendung als Bindemittel (und damit als Klinkerersatz) ermöglicht. Dieses dritte Stadium ist somit die mechano-chemische Aktivierung und unterscheidet sich von dem Mahlen, welches in dem ersten Stadium durchgeführt wird. Somit ist Mahlen gemäß dem Stand der Technik eben nicht mechano-chemische Aktivierung und nicht jede Mühle nach dem Stand der Technik zur mechano-chemischen Aktivierung geeignet.

In einer weiteren Ausführungsform der Erfindung weist die Mühle eine Kühlvorrichtung auf. Die Kühlvorrichtung ist im oder am Gehäuse der Mühle angeordnet oder ist Bestandteil des Gehäuses. Zusätzlich kann die Kühlvorrichtung auch beispielsweise in der Welle in der Mühle angeordnet sein. Die Steuervorrichtung ist mit der Kühlvorrichtung zur Regelung der Kühlleistung verbunden. Die Kühlvorrichtung wird üblicherweise mit einem Kühlfluid, insbesondere Wasser, betrieben und ist daher in der Lage auch große Wärmemengen aufzunehmen und zu transportieren. Durch die äußere Anordnung ist die Kühlung träge insbesondere in Bezug auf Regelung. Auf der anderen Seite kann beispielsweise die Kühlfluideintrittstemperatur Schwankungen unterliegen, beispielsweise wetterbedingt. Kommt es beispielsweise witterungsbedingt zu einem Ansteigen der Kühlwassertemperatur, kann die Effizienz der Kühlung durch eine Kühlvorrichtung sinken und so zu einem Anstieg der Temperatur im Inneren führen.

In einer weiteren Ausführungsform der Erfindung ist das erste Temperaturerfassungselement angeordnet an einer Position ausgewählt aus der Gruppe umfassend Gehäuse der Mühle, Welle der Mühle, Produktauslass der Mühle. Eine Anordnung am Gehäuse ist, wie bereits ausgeführt, einfach. Eine Anordnung an oder in der Welle ist ebenfalls einfach, hier kann es jedoch durch die mechanische Belastung zu Verschleiß kommen. Eine weitere Option ist daher die Erfassung der Produkttemperatur direkt am Produktauslass der Mühle und somit außerhalb des Mahlraums.

Selbstverständlich können bevorzugt auch beliebige Kombinationen gewählt werden, wenn mehrere Temperaturerfassungselemente verwendet werden.

**In** einer weiteren Ausführungsform der Erfindung ist das erste Temperaturerfassungselement hinter einem Auslaufrotor in einem Austragsbereich angeordnet, bevorzugt im vorderen Drittel des Austragsbereichs. Die Anordnung des Temperaturerfassungselements ist derart optimiert, dass möglichst gut die Temperatur des Mahlgutes in der Mühle erfasst werden kann, was durch die Bewegung während des Mahlens direkt im Inneren der Mühle schwierig bis ausgeschlossen ist. Messungen am Gehäuse oder der Wand haben, teilweise bedingt auch durch dort gegebenenfalls vorhandene Kühlvorrichtungen, wenigstens aber durch deren große Wärmekapazität nur eine begrenzte Genauigkeit und Zeitauflösung. Daher ist diese Anordnung besonders gut geeignet, um eine möglichst zeitnahe und möglichst genaue Temperaturmessung des Mahlgutes selber vorzunehmen und so die Wirklichkeit im Inneren der Mühle richtig wiederzugeben.

**In** einer weiteren Ausführungsform der Erfindung ist das erste Temperaturerfassungselement zur kontaktlosen Temperaturerfassung der Temperatur des Mahlgutes in der Mühle ausgebildet. Diese aufwändigste und herausforderndste Erfassung hat aber den Vorteil, dass die Temperatur des Mahlgutes direkt erfasst wird. Dadurch hat zum einen eine zeitliche Verzögerung durch die thermische Trägheit des Gesamtsystems keinen Einfluss. Außerdem kann eine Temperaturobergrenze T_{G} nach Materialkenntnis gesetzt werden und ist nicht auf das thermische Verhalten der gesamten Vorrichtung anzupassen. Bevorzugt erfolgt die kontaktlose Temperaturerfassung mittels Infrarot-Messung.

In einer weiteren Ausführungsform der Erfindung weist die Mühle ein Innenvolumen von wenigstens 1 m³ auf.

In einer weiteren Ausführungsform der Erfindung weist die Mühle eine Energiedichte von wenigstens 200 kW/m³ auf.

In einer weiteren Ausführungsform der Erfindung weist die Mühle eine Länge von wenigstens 2 m, bevorzugt von wenigstens 2,5 m, auf.

In einer weiteren Ausführungsform der Erfindung weist die Mühle eine Querschnittsfläche senkrecht zur Längsachse von wenigstens 0,71 m², bevorzugt von wenigstens 0,75 m², auf.

In einer weiteren Ausführungsform der Erfindung die Mühle ein Verhältnis von Länge zu Durchmesser von wenigstens 3, bevorzugt von wenigstens 3,5, auf.

Die Erfindung betrifft ein Verfahren zur mechanischen Aktivierung eines mineralischen Materials mit einer Mühle. Derartige Verfahren sind beispielsweise aus der DE 10 2023 106 210, der DE 10 2023 106 217, der DE 10 2023 106 221, der DE 10 2023 106 222 oder der DE 10 2023 123 525 bekannt. Das Verfahren weist die folgenden Schritte auf:
a) Vorgeben einer Temperaturobergrenze T_{G},
b) Kontinuierliches Erfassen der Temperatur T der Mühle und/oder des Mahlgutes,
c) Vergleichen der erfassten Temperatur T mit der Temperaturobergrenze T_{G},
d) Anpassen der Antriebsleistung der Mühle und der zugeführten Mahlgutmenge in Abhängigkeit des Vergleichs in Schritt c).

Zusätzlich zu dem herkömmlichen Verfahren erfolgt eine Temperaturüberwachung. Damit wird verhindert, dass das Produkt überhitzt und die wertvollen Eigenschaften der mechanischen Aktivierung verliert und ähnlich zu einem thermisch aktivierten Produkt wird.

Wesentlich ist hierbei, dass in Schritt d) eine Anpassung der Mahlenergie und der Menge des Mahlguts erfolgt, sodass der für die mechanische Aktivierung hohe Energieeintrag gewährleistet bleibt. Ebenso kann beispielsweise bei einer geringeren Temperatur auch der Durchsatz erhöht werden, indem sowohl Energieeintrag als auch Materialeintrag erhöht werden.

Das Erfassen in Schritt b) kann hierbei in einfachster Form an der Außenseite des Gehäuses der Mühle erfolgen. Dadurch ist die Integration einfach und Verschleiß wird vermieden. Dafür ist diese Erfassung aufgrund der Trägheit des Gesamtsystems am ungenauesten. Außerdem ist die hier erfasste Temperatur niedriger als die Temperatur des Mahlgutes selbst. Am besten ist die Erfassung des Mahlgutes innerhalb der Mühle, beispielsweise durch einen kontaktlosen IR-Sensor. Herausfordernd ist hier die Integration in den Mahlraum mit seinen starken mechanischen Belastungen sowie die Staubentwicklung im Inneren des Mahlraumes. Weiter kann die Messung beispielsweise am aus der Mühle austretenden Produkt erfasst werden.

Das Vergleichen in Schritt c) kann digital erfolgen. Ein Überschreiten führt zu einer Reduktion der Antriebsleistung und der zugeführten Mahlgutmenge in Schritt d) und ein Unterschreiten führt zu einer Erhöhung der Antriebsleistung und der zugeführten Mahlgutmenge in Schritt d). Bevorzugt kann eine Anpassung aber auch in Abhängigkeit des Abstandes der in Schritt b) erfassten Temperatur von der Temperaturobergrenze T_{G} erfolgen. Beispielsweise kann je näher sich die erfasste Temperatur T an die Temperaturobergrenze T_{G} annähert, umso stärker die Antriebsleistung und die zugeführte Mahlgutmenge in Schritt d) reduziert werden. Auf der anderen Seite wird je weiter sich die erfasste Temperatur T von der Temperaturobergrenze T_{G} nach unten entfernt, umso mehr wird die Antriebsleistung und die zugeführte Mahlgutmenge in Schritt d) erhöht.

Bei der Anpassung in Schritt d) kann bevorzugt die eingebrachte Energie je Menge Mahlgut konstant gehalten werden, beispielsweise bei 500 kWh/t. Dadurch wird eine konstante Aktivierungsqualität gewährleistet.

Eine direkte Beziehung zwischen Antriebsleistung und zugeführter Mahlgutmenge ist jedoch nicht zwingend gegeben, da es auch weitere Einstellmöglichkeiten gibt, beispielweise eine zusätzliche Kühlung.

Besonders bevorzugt wird die Temperaturobergrenze T_{G} zwischen 250 °C und 300 °C vorgegeben.

In einer weiteren Ausführungsform der Erfindung wird zusätzlich ein Temperaturbetriebsbereich vorgegeben. Der Temperaturbereich liegt hierbei vorzugsweise unter der Temperaturobergrenze T_{G} oder kann diese aufweisen. Der Temperaturbetriebsbereich weist eine Bereichsobergrenze T_{BO} und eine Bereichsuntergrenze T_{BU} auf. Hierbei kann die Temperaturobergrenze T_{BO} gleich der Temperaturobergrenze T_{G} sein. Bei der Feststellung des Unterschreitens der Bereichsuntergrenze T_{BU} durch die Temperatur T werden die Antriebsleistung und die zugeführte Mahlgutmenge gesteigert. Bei der Feststellung des Überschreitens der Bereichsobergrenze T_{BO} durch die Temperatur T werden die Antriebsleistung und die zugeführte Mahlgutmenge gesenkt. Die Verwendung eines solchen Temperaturbereichs erleichtert die Steuerung.

In einer weiteren Ausführungsform der Erfindung wird die Temperatur des aus der Mühle austretenden Mahlgutes erfasst. Die Erfassung am Ausgang ist einfacher als die Erfassung direkt in der Mühle. Ein Nachteil ist, dass ein Zeitversatz durch den Transport durch die Mühle auftritt, also die Erfassung dann erst nach der Vollendung des Mahlvorgangs erfolgt.

In einer weiteren Ausführungsform der Erfindung wird in Abhängigkeit des Vergleichs in Schritt c) der durch die Mühle geführte Gasstrom angepasst. Durch den Gasstrom durch die Mühle kann ein Teil der Wärme abgeführt und somit eine Kühlung erreicht werden. Aufgrund der geringen Wärmekapazität des Gasstromes ist dieses jedoch limitiert.

In einer weiteren Ausführungsform der Erfindung wird in Abhängigkeit des Vergleichs in Schritt c) die Kühlleistung der Mühle angepasst. Hierbei erfolgt die Kühlung vorzugsweise im Gehäuse der Mühle. Optional kann die Kühlung auch in der Welle vorgesehen sein.

In einer weiteren Ausführungsform der Erfindung wird beim Überschreiten der Temperaturobergrenze T_{G} eine Direktkühlung durch Wassereinspritzung vorgenommen, um eine schnelle und effiziente Kühlung zu erreichen.

In einer weiteren Ausführungsform der Erfindung wird die Reaktivität des aus der Mühle austretenden Mahlgutes erfasst. Hierbei kann die Erfassung der Reaktivität inline erfolgen, aufgrund der Komplexität wird aber bevorzugt eine Analyse nach Probennahme durchgeführt, insbesondere wird das Abbindeverhalten untersucht. Gerade bei einer Temperaturerfassung nur am Gehäuse der Mühle kann dieses ein wesentlicher zusätzlicher Indikator für das Überschreiten der Temperaturobergrenze T_{G} sein.

In einer weiteren Ausführungsform der Erfindung erfolgt die Anpassung in Schritt d) zusätzlich auch in Abhängigkeit von der erfassten Reaktivität. Ein Überschreiten der Temperaturobergrenze T_{G}, wird in einer absinkenden Reaktivität beziehungsweise einem erhöhten Wasserbedarf erkennbar.

In einer weiteren Ausführungsform der Erfindung wird die Mühle mit einer Verweilzeit des Mahlgutes in der Mühle von wenigstens 5 min, bevorzugt wenigstens 10 min, besonders bevorzugt wenigstens 20 min, betrieben.

Nachfolgend ist das erfindungsgemäße Verfahren anhand der Vorrichtung anhand eines in der Zeichnung dargestellten Ausführungsbeispiels näher erläutert.

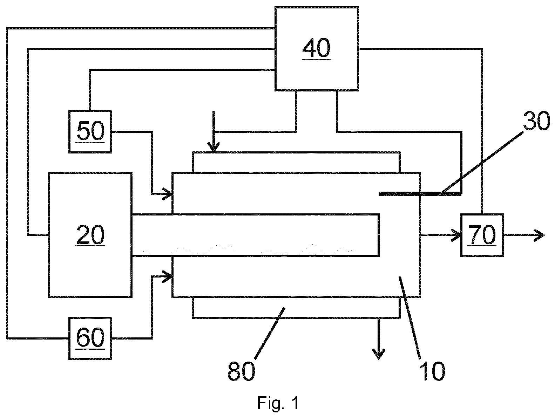

- Fig. 1: Vorrichtung mit Steuervorrichtung

In Fig. 1 ist eine beispielhafte Vorrichtung gezeigt. Kern der mechanischen Aktivierung ist eine Mühle 10, beispielsweise und bevorzugt eine Rührwerkskugelmühle. Die Mühle wird über einen Antrieb 20 angetrieben. Über eine Materialzuführung 50 wird das Mahlgut zugeführt und über eine Gaszuführung 60 kann Gas zugeführt werden. Das gemahlene Produkt wird mittels einer Reaktivitätsmessvorrichtung 70 untersucht. Die Reaktivitätsmessvorrichtung 70 ist beispielsweise ein Kalorimeter. Des Weiteren weist die Mühle 10 einen Kühlmantel 80 auf.

Des Weiteren weist die Vorrichtung eine Steuervorrichtung 40 auf, die insbesondere mit dem Temperaturerfassungselement 30 verbunden ist. Entsprechend der dort erfassten Temperatur T und einem Vergleich mit einer Temperaturobergrenze T_{G} erfolgt die Steuerung der weiteren Komponenten. Steigt die Temperatur T in die Nähe oder über T_{G}, kann zunächst beispielsweise der Kühlmitteldurchfluss durch den Kühlmantel 80 und/oder der Gasstrom durch die Gaszuführung 60 gesteigert werden. Wesentlich aber ist, dass auch die Leistung des Antriebs 20 und die zugeführte Menge an Mahlgut durch die Materialzuführung 50 reduziert werden kann. Fällt die Temperatur T, kann die Vorrichtung wieder hochgefahren werden und die Leistung des Antriebs 20 und die zugeführte Menge an Mahlgut durch die Materialzuführung 50 wieder gesteigert werden.

### Bezugszeichen

- 10: Mühle
- 20: Antrieb
- 30: Temperaturerfassungselement
- 40: Steuervorrichtung
- 50: Materialzuführung
- 60: Gaszuführung
- 70: Reaktivitätsmessvorrichtung
- 80: Kühlmantel

## Patentansprüche

1. Verfahren zur mechanischen Aktivierung eines mineralischen Materials mit einer Mühle (10), wobei das Verfahren die folgenden Schritte aufweist:
a) Vorgeben einer Temperaturobergrenze T_{G},
b) Kontinuierliches Erfassen der Temperatur T der Mühle (10) und/oder des Mahlgutes,
c) Vergleichen der erfassten Temperatur T mit der Temperaturobergrenze T_{G},
d) Anpassen der Antriebsleistung der Mühle (10) und der zugeführten Mahlgutmenge in Abhängigkeit des Vergleichs in Schritt c).

2. Verfahren nach Anspruch 1, **dadurch gekennzeichnet, dass** zusätzlich ein Temperaturbetriebsbereich vorgegeben wird, wobei der Temperaturbetriebsbereich eine Bereichsobergrenze T_{BO} und eine Bereichsuntergrenze T_{BU} aufweist, wobei bei der Feststellung des Unterschreitens der Bereichsuntergrenze T_{BU} durch die Temperatur T die Antriebsleistung und die zugeführte Mahlgutmenge gesteigert werden, wobei bei der Feststellung des Überschreitens der Bereichsobergrenze T_{BO} durch die Temperatur T die Antriebsleistung und die zugeführte Mahlgutmenge gesenkt werden.

3. Verfahren nach einem der Ansprüche 1 bis 2, **dadurch gekennzeichnet, dass** die Temperatur des aus der Mühle (10) austretenden Mahlgutes erfasst wird.

4. Verfahren nach einem der Ansprüche 1 bis 3, **dadurch gekennzeichnet, dass** in Abhängigkeit des Vergleichs in Schritt c) der durch die Mühle (10) geführte Gasstrom angepasst wird.

5. Verfahren nach einem der Ansprüche 1 bis 4, **dadurch gekennzeichnet, dass** in Abhängigkeit des Vergleichs in Schritt c) die Kühlleistung der Mühle (10) angepasst wird.

6. Verfahren nach einem der Ansprüche 1 bis 5, **dadurch gekennzeichnet, dass** die Reaktivität des aus der Mühle (10) austretenden Mahlgutes erfasst wird.

7. Verfahren nach Anspruch 6, **dadurch gekennzeichnet, dass** die Anpassung in Schritt d) zusätzlich auch in Abhängigkeit von der erfassten Reaktivität erfolgt.

## Claims

1. A method for mechanically activating a mineral material by means of a mill (10), wherein the method comprises the following steps:
a) specifying an upper temperature limit T_{G},
b) continuously detecting the temperature T of the mill (10) and/or the milling material,
c) comparing the detected temperature T with the upper temperature limit T_{G},
d) adjusting the drive power of the mill (10) and the supplied quantity of milling material on the basis of the comparison in step c).

2. The method according to claim 1, **characterized in that** an operating temperature range is additionally specified, wherein the operating temperature range has an upper range limit T_{BO} and a lower range limit T_{BU}, wherein, when it is determined that the temperature T has fallen below the lower range limit T_{BU}, the drive power and the supplied quantity of milling material are increased, wherein, when it is determined that the temperature T has exceeded the upper range limit T_{BO}, the drive power and the supplied quantity of milling material are decreased.

3. The method according to any of claims 1 to 2, **characterized in that** the temperature of the milling material emerging from the mill (10) is detected.

4. The method according to any of claims 1 to 3, **characterized in that** the gas stream guided through the mill (10) is adjusted on the basis of the comparison in step c).

5. The method according to any of claims 1 to 4, **characterized in that** the cooling power of the mill (10) is adjusted on the basis of the comparison in step c).

6. The method according to any of claims 1 to 5, **characterized in that** the reactivity of the milling material emerging from the mill (10) is detected.

7. The method according to claim 6, **characterized in that** the adjustment in step d) additionally also takes place on the basis of the detected reactivity.

## Revendications

1. Procédé servant à l'activation mécanique d'une matière minérale avec un broyeur (10), où le procédé présente les étapes suivantes consistant :
a) à spécifier une limite supérieure de température T_{G},
b) à détecter de façon continue la température T du broyeur (10) et/ou du matériau à broyer,
c) à comparer la température T - ayant été détectée - à la limite supérieure de température T_{G},
d) à ajuster, en fonction de la comparaison effectuée au cours de l'étape c), la puissance d'entraînement du broyeur (10) et la quantité de matériau à broyer ayant été fournie.

2. Procédé selon la revendication 1, **caractérisé en ce qu'**une plage de température de fonctionnement est spécifiée de façon supplémentaire, où la plage de température de fonctionnement présente une limite supérieure T_{BO} de la plage et une limite inférieure T_{BU} de la plage, où, lorsque l'on constate le dépassement vers le bas, par la température T, de la limite inférieure T_{BU} de la plage, la puissance d'entraînement et la quantité de matériau à broyer ayant été fournie sont augmentées, où, lorsque l'on constate le dépassement vers le haut, par la température T, de la limite supérieure T_{BO} de la plage, la puissance d'entraînement et la quantité de matériau à broyer ayant été fournie sont diminuées.

3. Procédé selon l'une des revendications 1 à 2, **caractérisé en ce que** la température du matériau à broyer sortant du broyeur (10) est détectée.

4. Procédé selon l'une quelconque des revendications 1 à 3, **caractérisé en ce que** le flux de gaz circulant dans le broyeur (10) est ajusté en fonction de la comparaison effectuée au cours de l'étape c).

5. Procédé selon l'une quelconque des revendications 1 à 4, **caractérisé en ce que** la puissance de refroidissement du broyeur (10) est ajustée en fonction de la comparaison effectuée au cours de l'étape c).

6. Procédé selon l'une quelconque des revendications 1 à 5, **caractérisé en ce que** la réactivité du matériau à broyer sortant du broyeur (10) est détectée.

7. Procédé selon la revendication 6, **caractérisé en ce que** l'ajustement effectué au cours de l'étape d) a lieu aussi, de façon supplémentaire, en fonction de la réactivité ayant été détectée.
